# EUROPEAN PATENT SPECIFICATION

(11) **EP 2 421 259 B1**
(45) Date of publication and mention of the grant of the patent: **13.02.2019**
(21) Application number: 09843228.9
(22) Date of filing: 25.08.2009
(51) Int. Cl.: H04N 7/173, H04L 29/08, H04N 21/6437, H04N 21/437, H04N 21/63

(54) **METHOD, SYSTEM AND HOME STREAM MEDIA SERVER FOR IMPLEMENTING VIDEO ON DEMAND SERVICE**
VERFAHREN, SYSTEME UND HEIMAT-STREAM-MEDIENSERVER ZUR IMPLEMENTIERUNG EINES VIDEO-ON-DEMAND-DIENSTES
PROCÉDÉ, SYSTÈME ET SERVEUR DE CONTENU MULTIMÉDIA DOMESTIQUE POUR METTRE EN OEUVRE UN SERVICE DE VIDÉO À LA DEMANDE

(30) Priority: 15.04.2009 CN 200910132872
(43) Date of publication of application: 22.02.2012
(73) Proprietor: ZTE Corporation, Shenzhen, Guangdong 518057 (CN)
(72) Inventor: LIU, Shu, Guangdong 518057 (CN); FAN, Jianming, Guangdong 518057 (CN); HONG, Jianfeng, Guangdong 518057 (CN)
(74) Representative: Office Freylinger
(86) International application number: PCT/CN2009/073502
(87) International publication number: WO 2010/118594

(56) References cited:
- WO-A1-01/22688
- CN-A- 1 691 591
- CN-A- 101 068 339
- GB-A- 2 385 683

## Description

### Field of the Invention

The present invention relates to the streaming media service field, and in particular to a method and a system for implementing a video on demand service and a home streaming media server.

### Background of the Invention

A video on demand system is generally consisted of a plurality of streaming media server nodes, a dispatching server and an Electronic Program Guide (EPG), wherein each streaming media server node stores corresponding programs which are on demand. A client device, such as a Set Top Box (STB), generally implements a video on demand service the manner as follows.
1. The STB obtains information of the dispatching server through the EPG, and sends to the dispatching server a Real Time Streaming Protocol (RTSP) message which carries information of contents on demand, to request a service on demand.
2. The dispatching server determines one streaming media server node capable of providing services according to the received information, and informs the STB of information of the node through a RTSP message.
3. The STB parses the message to obtain the information of the streaming media server node which currently can provide services, establishes a link with it, and starts to transmit media packets.

However, the defects of this manner are: a redirection of a program on demand can only be performed at the start of the demand, and a redirection can not be implemented during the current demand process, thus the increasingly higher requirements of people for video service experience can not be met.
GB 2 385 683 discloses a conventional video distribution system comprising a number of local servers provided to service to the user.

### Summary of the Invention

A technical problem to be solved by the present invention is how to provide a method and a system for implementing a video on demand service and a home streaming media server, to support a redirection during a process of a program on demand.

In order to solve the above technical problem, the present invention is achieved through the following technical solutions: a method for implementing a video on demand service according to claim 1, a video on demand system according to claim 5, and a home streaming media server according to claim 7.

A method for implementing a video on demand service is provided according to one aspect of the present invention. The method is applied in a video on demand system, which system comprises a client device, a dispatching server, a streaming media server and a home streaming media server which provides a media service for a client.

The method for implementing a video on demand service according to the present invention is defined by the subject-matter of claim 1. It comprises: when the home streaming media server is incapable of providing a media service for the client device, the home streaming media server obtains, from the dispatching server, information of a streaming media server capable of providing the media service, and the media server is provided by the streaming media service for the client device.

Furthermore, the home streaming media server being incapable of providing the media service for the client device comprises: when starting a video on demand service or during a process of the video on demand service, the home streaming media server is incapable of proving the media service to the client device.

Furthermore, the streaming media server capable of providing media service providing the media service for the client device comprises:
when the video on demand service starts, if the home streaming media server is incapable of providing media service for the client device, the home streaming media server forwarding to the client device the information of the streaming media server capable of providing the media service, which is obtained from the dispatching server to the client device, and the client device requesting a service on demand from the streaming media server capable of providing the media service according to the information.

Furthermore, the step of said streaming media server capable of providing the media service providing media service for the client device comprises:
during the process of the video on demand service, when the home streaming media server is incapable of providing the media service for the client device, the home streaming media server obtaining the information of the streaming media server capable of providing the media service, and requesting media resources from the streaming media server capable of providing the media service, and transmitting a control message between the client device and the streaming media server capable of providing the media server transparently; and the client device establishing a media link with the streaming media server capable of providing the media service, and updating a media source address of the client device.

Furthermore, the step of the home streaming media server requesting the media resources from the streaming media server capable of providing the media service comprises:
the home streaming media server constructing a SETUP command of a RTSP protocol which carries the media address information of the client device, and simulating the client device to request the media resources from the streaming media server capable of providing media service.

Furthermore, the method also comprises: when the streaming media server capable of providing media service for the client device provides the media service for the client device, the home streaming media server keeps a control link with the client device.

Secondly, the present invention also provides a video on demand system, as defined by claim 5. The system includes a client device, a dispatching server, a streaming media server and a home streaming media server providing media service for a client, when the home streaming media server is incapable of providing a media service for the client device,
the home streaming media server is adapted to inquire, from the dispatching server, information of the streaming media server capable of providing the media server;
the dispatching server is adapted to, after receiving an inquiry request from the home streaming media server, select a streaming media server capable of providing the media service for the client device, and reply the information of said streaming media server to the home streaming media server; and
the client device is adapted to receive a media service from the streaming media server selected by the dispatching server

Furthermore, when a video on demand service starts, if the home streaming media server is incapable of providing media service for the client device,
the home streaming media server is also adapted to forward to the client device the information of the streaming media server capable of providing the media service, which is obtained from the dispatching server to the client device; and
the client device is also adapted to request a service on demand from the streaming media server capable of providing the media service according to the information.

Furthermore, during a process of the video on demand service, when the home streaming media server is incapable of providing media service for the client device,
the home streaming media server is also adapted to obtain the information of the streaming media server capable of providing the media service, request media resources from the streaming media server capable of providing the media service, and transmit a control message between the client device and the streaming media server capable of providing the media service transparently; and
the client device is also adapted to establish a media link with the streaming media server capable of providing media service, update a media source address of the client device, and receive a media stream.

A home streaming media server is also provided according to another aspect of the present invention.

The home streaming media server according to the present invention is defined according to claim 7. It comprises: an inquiring module, a sending module, a simulating module and a transparent transmission module, wherein the inquiring module is adapted to obtain from a dispatching server information of a streaming media server capable of providing a media service; the sending module is adapted to forward to the client device the information of the streaming media server capable of providing the media service for a client device, which is obtained from the dispatching server; the simulating module is adapted to request media resources from the streaming media server capable of providing the media service for a client device; and the transparent transmission module is adapted to transmit a control message between the client device and the streaming media server capable of providing media service transparently

Comparing with the prior art, the present invention has the following beneficial effects that: by implementing the present invention particularly, a redirection during a process of a video on demand service is achieved, and the defects of traditional video on demand systems in terms of redirection function are remedied. Additionally, a common streaming media server in a system has, among others, one function of severing as a home streaming media server which results in low complexity of implementation of the present invention, increases the networking flexibility of the video on demand system, and is advantageous for overcoming the limitation of the existing methods and systems for implementing video on demand service, thus more service types are developed and better video on demand service quality is provided.

Other features and advantages of the present invention will be described hereinafter and partly become obvious from the specification, or be understood by implementing the present invention. The objects and other advantages of the present invention can be realized and obtained through the structures specified in the specification, claims and accompanying drawings.

### Brief Description of the Drawings

The accompanying drawings are used to provide a further understanding of the present invention and form a part of the specification, and are used to explain the present invention together with the embodiments of the present invention, and do not impose limitation on the present invention. In the accompanying drawings:
Fig. 1 is a flowchart of the implementation of a traditional video on demand service;
Fig. 2 is a flowchart of the implementation of the present invention when a video on demand service starts;
Fig. 3 is a flowchart of the implementation of the present invention when a redirection is performed during a process of a video on demand service;
Fig. 4 is a typology diagram of a video on demand system provided by the present invention; and
Fig. 5 is a structural diagram of a home streaming media server provided by the present invention.

### Detailed Description of the Embodiments

For better understanding the present invention, the present invention will be further described in conjunction with the drawings and specific embodiments hereinafter.

A processing procedure related to the present invention will be described in detail in conjunction with the drawings hereinafter.

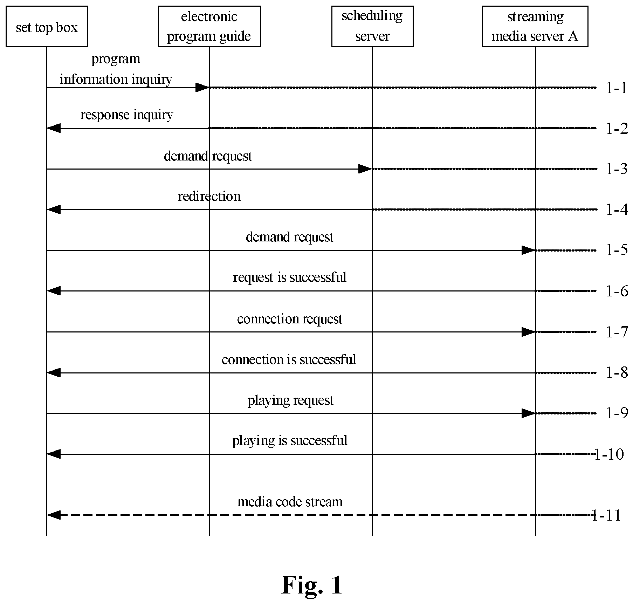

As shown in Fig. 1, which is the implementing flow of a traditional video on demand service, the implementing flow comprises the following steps.
1-1, a user demands a program, and a STB inquires information of the program on demand from an EPG through the HTTP protocol.
1-2, the EPG returns the information of the program on demand, which contains address information of a dispatching server
1-3, the STB parses a message received from the EPG to obtain the address of the dispatching server, and sends a RTSP message to the dispatching server to request a service on demand.
1-4, the dispatching server allocates a streaming media server node, i.e. streaming media server A, to provide the this service according to a certain strategy, and uses the REDIRECT command in the RTSP protocol to return information of the redirected destination streaming media server, i.e. the address of the streaming media server A and etc, to the STB.
1-5, 1-6, 1-7, 1-8, 1-9, 1-10, after the STB parses to obtain the information of the streaming media server A, the STB uses the RTSP protocol to request the service on demand from the streaming media server A; and
1-11. the STB receives a media code stream sent by the streaming media server A, and enters the service on demand.

It can be known from the above that the traditional video on demand service can only perform a redirection at the start of a service, and is incapable of achieving the redirection during a process of the video on demand service.

A method for implementing a video on demand service is firstly provided according to an embodiment of the present invention.

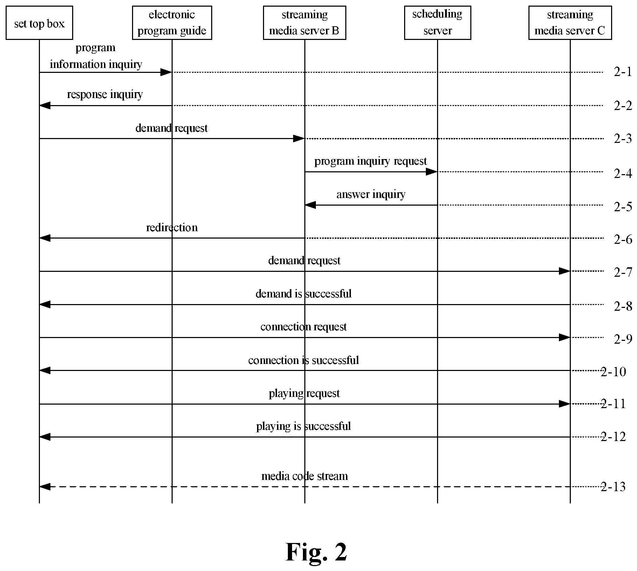

Fig. 2 is a flowchart of the implementation of the present invention when a video on demand service starts.

As shown in Fig. 2, the video on demand system includes at least one STB, one EPG, one dispatching server and two streaming media servers, wherein one of the two streaming media servers is a home streaming media server of the STB.

The implementation steps of the flow are as follows.
2-1, a user demands a program, and a STB inquires information of the program on demand from an EPG through the HTTP protocol.
2-2, the EPG returns the information of the program on demand, and a reply message including information of the address of the home streaming media server 1 of the STB and the like.
2-3, the STB parses a message received from the EPG to obtain the address of home streaming media server 1 and sends a RTSP message to the home streaming media server 1 to request a service on demand.
2-4, after receiving the RTSP message, the home streaming media server 1 judges whether itself can provide this video on demand service, wherein if yes, it directly provides this service for the STB; otherwise, the home streaming media server 1 inquires the dispatching server about information of a streaming media server node capable of providing the corresponding service.
2-5, after receiving the above inquiry, the dispatching server allocates a streaming media server B to provide this service according to a certain strategy, and returns information of the address of the streaming media server B and the like to the home streaming media server 1.
2-6, after obtaining the information of the address of the streaming media server B and the like, the home streaming media server 1 informs the STB of the information of the address of the streaming media server B and the like through the REDIRECT command in the RTSP protocol.
2-7, 2-8, 2-9, 2-10, 2-11, 2-12, after parsing to obtain the information of the address of the streaming media server B and the like, the STB uses the RTSP protocol to request the service on demand from the streaming media server B.
2-13, the STB receives a media code stream sent by the streaming media server B, and enters the service on demand.

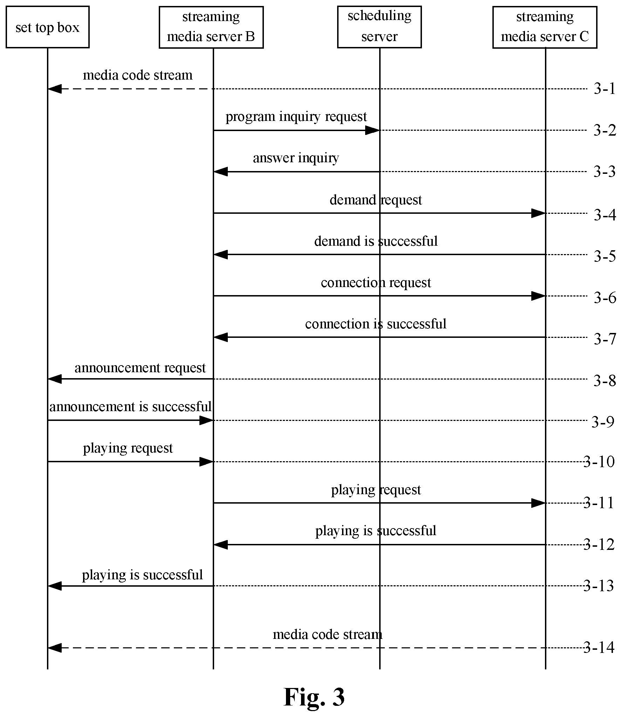

Fig. 3 is a flowchart of the implementation of the present invention when a redirection is performed.

As shown in Fig. 3, the construction of the video on demand system is basically the same as the above embodiment, except that the streaming media server B is the home streaming media server 2 of the STB and is currently providing a video on demand service for the STB.

The implementation steps of the flow are as follows.
3-1, the STB is in a service on demand state, and receives a media code stream from the streaming media server B.
3-2, in the case that an error occurs when the streaming media server B sends the media code stream, or the user changes the program on demand, or the streaming media server B receives an upper service notification to migrate the user, a redirection flow during the demand is triggered, and the streaming media server B requests from a content dispatching server information of an streaming media server node capable of providing the corresponding service.
3-3, the dispatching server allocates a streaming media server C to provide the service according to a certain strategy, and returns information of the server C to the streaming media server B.
3-4, the streaming media server B obtains the information of the streaming media server C, constructs the DESCRIBE (demand) command in the RTSP protocol which carries the information of the current program on demand, and simulates the STB to inquire the information of the program on demand from the streaming media server C.
3-5, after receiving the above inquiry, the streaming media server C judges whether itself can provide the service on demand of the program, wherein if yes, then the information of the program on demand is returned to the streaming media server B.
3-6, the streaming media server B constructs the SETUP (connection) command in the RTSP protocol which carries the media address information of the STB, simulates the STB to request media resources from the streaming media server C, and establishes a media link
3-7, after receiving the above request, the streaming media server C starts to establish the media link, wherein if the establishment succeeds, a success response is returned to the streaming media server B.
3-8, after receiving the success response, the streaming media server B informs, through the ANNOUNCE (announce) command in the RTSP protocol, the STB that the media source address is changed and it is required to update the media source address.
3-9, after receiving the above notification, the STB returns a success response of the ANNOUNCE command to the media server B, and constructs the PLAY(play) command in the RTSP protocol which carries the information of the program being currently played, in which information of the play rate and current play point and the like are carried.
3-10, the STB sends the PLAY command to the streaming media server B, and informs the new media source to send the media code stream.
3-11, after receiving the PLAY command from the STB, the streaming media server B transmits the PLAY command to the streaming media server C transparently.
3-12, the streaming media server C receives the PLAY command transmitted transparently by the media server B, sends a media packet to the STB, and brings the information of the new media source address back to the streaming media server B through a response.
3-13, the streaming media server B forwards the success response of the PLAY command from the streaming media server C to the STB; and after receiving the success response of the PLAY command, the STB parses to obtain the information of the new media source address, so as to update the related data in its own data area.
3-14, the STB receives the media code stream from the streaming media server C, and continues the service on demand before the redirection.

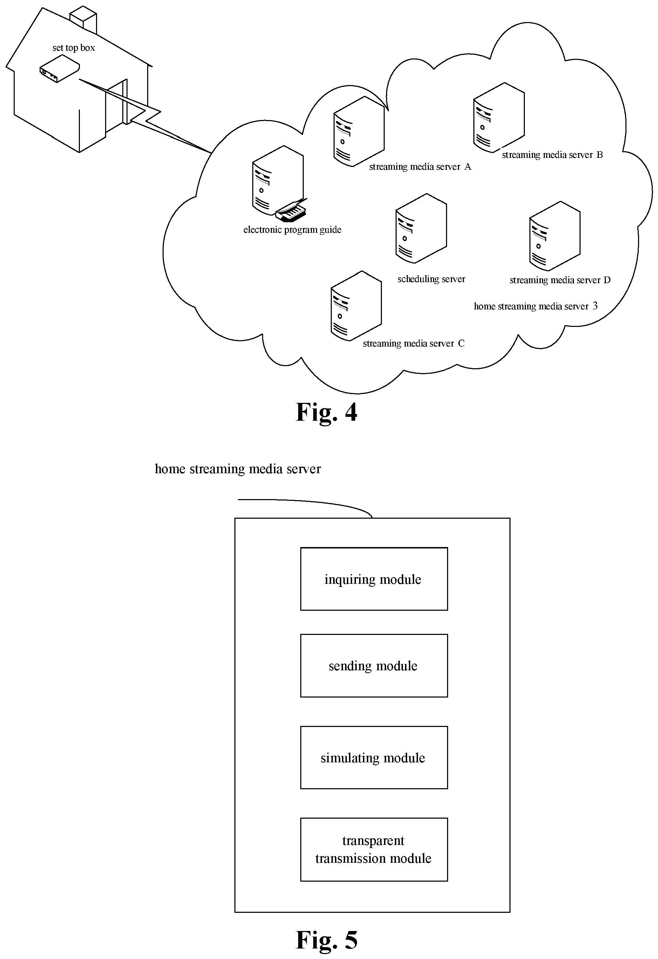

Fig. 4 is a topology diagram of a video on demand system provided by the present invention. As shown in Fig. 4, this video on demand system includes at least one STB, one EPG, one dispatching server and several streaming media servers. In these streaming media servers, the streaming media server D is a home streaming media server 3 of the STB.

When the on demand service starts: a user demands a program and a STB inquires the information of the on demand program from an EPG through the HTTP protocol; the EPG returns the information of the on demand program and a reply message including information such as the address of STB home streaming media server 3 and the like; the STB parses the message received from the EPG to obtain the address of home streaming media server 3 and sends a RTSP message to the home streaming media server 3 to request the on demand service; the home streaming media server 3 judges whether the home streaming media server 3 can provide this video on demand service after receiving this RTSP message, wherein if the judgment result is yes, it directly provides this service for the STB, otherwise, the home streaming media server 3 inquires from a dispatching server the information of an streaming media server node capable of providing corresponding service; the dispatching server allocates streaming media server B to provide this service according to a certain strategy after receiving the above request, and returns the information such as the address of streaming media server B and the like to the home streaming media server 3; the home streaming media server 3 informs the STB of the information such as the address of streaming media server B and the like through the REDIRECT command in the RTSP protocol after obtaining information such as the address of streaming media server B and the like; the STB parses to obtain the information such as the address of streaming media server B and the like and then uses the RTSP protocol to request the on demand service from streaming media server B; and the STB receives the media code stream sent by the streaming media server B and enters the on demand service.

When performing redirection in the process of the on demand service, the current streaming media server D is the home streaming media server 3 of the STB, and the current streaming media server D is currently providing video on demand service for the STB. The STB is in the state of on demand service and receives media code stream from the streaming media server D. The streaming media server D requests from a content dispatching server the information of an streaming media server node capable of providing corresponding service when the redirection procedure in the demand is triggered because errors occur when streaming media server D sends media code stream, or because the user changes the on demand program, or because streaming media server D receives the upper service notification to migrate users. The dispatching server allocates streaming media server C to provide the service according to a certain strategy and returns the information of the server C to streaming media server D. The streaming media server D obtains the information of streaming media server C and constructs the DESCRIBE command in the RTSP protocol which carries the information of the on demand program and simulates the STB to inquire the information of the on demand program from streaming media server C. The streaming media server C judges whether the streaming media server C can provide the on demand service of this program after receiving the above request, wherein if the judgment result is yes, it returns the information of the on demand program to streaming media server D. The streaming media server D constructs the SETUP command in the RTSP protocol which carries the address information of the STB media, simulates the STB to request media resources from the streaming media server C, and establishes a media link The streaming media server C starts to establish the media link after receiving the above request. If the establishment succeeds, it returns a success response to streaming media server D. The streaming media server D informs the STB that the media source address is changed and it is required to update the media source address through the ANNOUNCE command in the RTSP protocol after receiving the success response. The STB returns the success response of the ANNOUNCE command to the streaming media server D after receiving the above request and constructs the PLAY command in the RTSP protocol which carries the information of the on demand program, wherein the PLAY command carries the information such as the play rate and the current play point and the like. The STB sends the PLAY command to the streaming media server D and informs a new media source to send media code stream The streaming media server D transmits the PLAY command to streaming media server C transparently after receiving the PLAY command from the STB. The streaming media server C receives the PLAY command transmitted transparently by streaming media server D, sends media packets to the STB, and brings the address information of the new media source back to streaming media server D through a response. The streaming media server D forwards to the STB the success response to the PLAY command from streaming media server C. The STB parses to obtain the address information of the new media source after receiving the success response of the PLAY command, so as to update the relevant data in its own data area The STB receives the media code stream from streaming media server C and continues the on demand service before the redirection.

A home streaming media server is also provided according to an embodiment of the present invention.

Fig. 5 is a structural diagram of a home streaming media server provided by the present invention. As shown in Fig. 5, this server is applied in the video on demand system, which video on demand system also includes at least one STB, one EPG, one dispatching server and two streaming media servers.

This home streaming media server includes an inquiring module, a sending module, a simulating module and a transparent transmission module, wherein
the inquiring module is adapted to obtain from a dispatching server the information of a streaming media server capable of providing a media service, i.e. the home streaming media server inquires from a dispatching server the information of a streaming media server capable of providing the on demand service, and receives the information returned after the dispatching server makes selection according to a certain strategy;
the sending module is adapted to forward to the client device the information of the streaming media server capable of providing the media service for a client device, which is obtained from the dispatching server;
the simulating module, adapted to request media resources from the streaming media server capable of providing the media service for the client device, i.e. the home streaming media server constructs the SETUP command in the RTSP protocol which carries the address information of the client device media, and simulates the client device to request media resources from the streaming media server capable of providing media service; and
the transparent transmission module is adapted to transmit the control message between the client device and the streaming media server capable of providing media service transparently, to send to the streaming media server the message which is to sent to the streaming media server by the STB, and to send to the STB the message returned by the streaming media server.

As described above, by virtue of the technical solution provided by the embodiments of the present invention, in the whole video on demand system, the client device has a home streaming media server node, the message for requesting the on demand service of the client device is firstly sent to this node, and this node simulates the client device to interact and establish link with the dispatching server and the redirection destination streaming media server, and achieves the transparent transmission of responses between the client device and the streaming media server, so as to solve the redirection problems during traditional video on demand service. Additionally, a common streaming media server in the system has, among others, one function of serving as the home streaming media server, which results in lower implementation complexity of the invention, increasing the networking flexibility of video on demand system, and being advantageous to overcome the limitation of the existing methods and systems for implementing video on demand service, thereby developing more service types and providing better video on demand service quality.

Above description is only to illustrate the preferred embodiments but not to limit the present invention. Various alterations and changes to the present invention are apparent to those skilled in the art. The scope of the present invention is defined by the scope of the appended claims.

## Claims

1. A computer implemented method for implementing a video on demand service, which is applied in a video on demand system comprising a client device, a dispatching server, a streaming media server and a home streaming media server which provides a media service for a client, wherein,
when the home streaming media server is incapable of providing a media service for the client device, the home streaming media server obtains, from the dispatching server, information of a streaming media server capable of providing the media service, and the media service is provided by said streaming media server for the client device;
wherein the home streaming media server being incapable of providing the media service for the client device represents: when starting a video on demand service or during a process of the video on demand service, the home streaming media server is incapable of providing the media service to the client device; during the process of the video on demand service, when the home streaming media server is incapable of providing the media service for the client device, the home streaming media server obtaining the information of the streaming media server capable of providing the media service, and requesting media resources from the streaming media server capable of providing the media service, and transmitting a control message between the client device and the streaming media server capable of providing the media server transparently; and the client device establishing a media link with the streaming media server capable of providing the media service, and updating a media source address of the client device.

2. The method according to Claim1, wherein the step of said streaming media server capable of providing the media service providing the media service for the client device comprises:
when the video on demand service starts, if the home streaming media server is incapable of providing the media service for the client device, the home streaming media server forwarding to the client device the information of the streaming media server capable of providing the media service, which is obtained from the dispatching server to the client device, and the client device requesting a service on demand from the streaming media server capable of providing the media service according to the information.

3. The method according to Claim 1, wherein the step of the home streaming media server requesting the media resources from the streaming media server capable of providing the media service comprises:
the home streaming media server constructing a SETUP command of the RTSP protocol which carries media address information of the client device, and simulating the client device to request the media resources from the streaming media server capable of providing the media service.

4. The method according to any one of Claims 1-3, wherein the method further comprises: when the streaming media server capable of providing the media service for the client device provides the media service for the client device, the home streaming media server keeps a control link with the client device.

5. A video on demand system, which comprises a client device, a dispatching server, a streaming media server and a home streaming media server providing a media service for a client, wherein when the home streaming media server is incapable of providing a media service for the client device,
the home streaming media server is adapted to inquire, from the dispatching server, information of the streaming media server capable of providing the media service, and is adapted to simulate the client device to request media resources from said streaming media server and transmit a control message between the client device and said streaming media server transparently;
the dispatching server is adapted to, after receiving an inquiry request from the home streaming media server, select a streaming media server capable of providing the media service for the client device, and reply the information of said streaming media server to the home streaming media server; and
the client device is adapted to receive a media service from the streaming media server selected by the dispatching server;
wherein the home streaming media server being incapable of providing the media service for the client device represents: when starting a video on demand service or during a process of the video on demand service, the home streaming media server is incapable of providing the media service to the client device;
during the process of the video on demand service, when the home streaming media server is incapable of providing the media service for the client device, the home streaming media server is further adapted to obtain the information of the streaming media server capable of providing the media service, request media resources from the streaming media server capable of providing the media service, and transmit a control message between the client device and the streaming media server capable of providing the media service transparently; and the client device is further adapted to establish a media link with the streaming media server capable of providing the media service, update a media source address of the client device, and receive a media stream.

6. The system according to Claim 5, wherein when a video on demand service starts, if the home streaming media server is incapable of providing the media service for the client device,
the home streaming media server is further adapted to forward to the client device the information of the streaming media server capable of providing the media service, which is obtained from the dispatching server; and
the client device is further adapted to request a service on demand from the streaming media server capable of providing the media service according to the information.

7. A home streaming media server, wherein during the process of the video on demand service, when the home streaming media server is incapable of providing the media service for the client device, the home streaming media server comprises:
an inquiry module, adapted to obtain from a dispatching server information of a streaming media server capable of providing the media service;
a sending module, adapted to forward to the client device the information of the streaming media server capable of providing the media service for a client device, which is obtained from the dispatching server;
a simulating module, adapted to simulate the client device to request media resources from the streaming media server capable of providing the media service for the client device; and
a transparent transmission module, adapted to transmit a control message between the client device and the streaming media server capable of providing the media service transparently;
wherein the streaming media server is further adapted to obtain the information of the streaming media server capable of providing the media service, request media resources from the streaming media server capable of providing the media service; the the client device is adapted to establish a media link with the streaming media server capable of providing the media service, update a media source address of the client device, and receive a media stream.

## Patentansprüche

1. Ein computerimplementiertes Verfahren zum Implementieren eines Video-on-Demand-Dienstes, der in einem Video-on-Demand-System angewendet wird, welches eine Client-Vorrichtung, einen Verteilerserver, einen Streaming-Medienserver und einen Heim-Streaming-Medienserver umfasst, der einen Mediendienst für einen Client bereitstellt, wobei,
wenn der Heim-Streaming-Medienserver nicht in der Lage ist, einen Mediendienst für die Client-Vorrichtung bereitzustellen, der Heim-Streaming-Medienserver von dem Verteilerserver Information über einen Streaming-Medienserver erhält, der in der Lage ist, den Mediendienst bereitzustellen, und der Mediendienst von dem Streaming-Medienserver für die Client-Vorrichtung bereitgestellt wird;
wobei der Heim-Streaming-Medienserver, der nicht in der Lage ist, den Mediendienst für die Client-Vorrichtung bereitzustellen, Folgendes darstellt: wenn beim Starten eines Video-on-Demand-Dienstes oder während eines Vorgangs des Video-on-Demand-Dienstes der Heim-Streaming-Medienserver nicht in der Lage, den Mediendienst für die Client-Vorrichtung bereitzustellen; während des Vorgangs des Video-on-Demand-Dienstes, wenn der Heim-Streaming-Medienserver nicht in der Lage ist, den Mediendienst für die Client-Vorrichtung bereitzustellen, der Heim-Streaming-Medienserver, der die Information des Streaming-Medienservers erhält, der in der Lage ist, den Mediendienst bereitzustellen, und Medienressourcen von dem Streaming-Medienserver anfordert, der in der Lage ist, den Mediendienst bereitzustellen, und eine Steuernachricht zwischen der Client-Vorrichtung und dem Streaming-Medienserver weiterleitet, der in der Lage ist, den Medienserver transparent bereitzustellen; und die Client-Vorrichtung eine Medienverbindung mit dem Streaming-Medienserver herstellt, der in der Lage ist, den Mediendienst bereitzustellen, und eine Medienquellenadresse der Client-Vorrichtung aktualisiert.

2. Verfahren nach Anspruch 1, wobei der Schritt des Streaming-Medienservers, der in der Lage ist, den Mediendienst bereitzustellen, der den Mediendienst für die Client-Vorrichtung bereitstellt, Folgendes umfasst:
wenn der Video-on-Demand Dienst beginnt, falls der Heim-Streaming-Medienserver nicht in der Lage ist, den Mediendienst für die Client-Vorrichtung bereitzustellen, wobei der Heim-Streaming-Medienserver an die Client-Vorrichtung die Information des Streaming-Medienservers, der in der Lage ist, den Mediendienst bereitzustellen, weiterleitet, welche von dem Verteilerserver an der Client-Vorrichtung erhalten wird, und die Client-Vorrichtung, die einen Dienst auf Anforderung vom Streaming-Medienserver anfordert, der in der Lage ist, den Mediendienst gemäß der Information bereitzustellen.

3. Verfahren nach Anspruch 1, wobei der Schritt des Heim-Streaming-Medienservers, der die Medienressourcen von dem Streaming-Medienserver anfordert, der in der Lage ist, den Mediendienst bereitzustellen, Folgendes umfasst:
den Heim-Streaming-Medienserver, der einen SETUP-Befehl des RTSP-Protokolls konstruiert, das Medienadressinformation der Client-Vorrichtung trägt, und die Client-Vorrichtung simuliert, um die Medienressourcen von dem Streaming-Medienserver anzufordern, der in der Lage ist, den Mediendienst bereitzustellen.

4. Verfahren nach einem der Ansprüche 1-3, wobei das Verfahren ferner umfasst: wenn der Streaming-Medienserver, der in der Lage ist, den Mediendienst für die Client-Vorrichtung bereitzustellen, den Mediendienst für die Client-Vorrichtung bereitstellt, der Heim-Streaming-Medienserver eine Steuerverbindung mit der Client-Vorrichtung aufrechterhält.

5. Ein Video-on-Demand-System, das eine Client-Vorrichtung, einen Verteilerserver, einen Streaming-Medienserver und einen Heim-Streaming-Medienserver umfasst, der einen Mediendienst für einen Client bereitstellt, wobei, wenn der Heim-Streaming-Medienserver nicht in der Lage ist, einen Mediendienst für die Client-Vorrichtung bereitzustellen,
der Heim-Streaming-Medienserver eingerichtet ist, von dem Verteilerserver Information des Streaming-Medienservers abzufragen, der in der Lage ist, den Mediendienst bereitzustellen, und eingerichtet ist, die Client-Vorrichtung zu simulieren, um Medienressourcen von dem Streaming-Medienserver anzufordern und eine Steuernachricht zwischen der Client-Vorrichtung und dem Streaming-Medienserver transparent zu übertragen;
der Verteilerserver eingerichtet ist, nach dem Empfangen einer Anfrageanforderung von dem Heim-Streaming-Medienserver einen Streaming-Medienserver auszuwählen, der in der Lage ist, den Mediendienst für die Client-Vorrichtung bereitzustellen, und die Information des Streaming-Medienservers an den Heim-Streaming-Medienserver zu beantworten; und
die Client-Vorrichtung eingerichtet ist, einen Mediendienst von dem durch den Verteilerserver ausgewählten Streaming-Medienserver zu empfangen;
wobei der Heim-Streaming-Medienserver, der nicht in der Lage ist, den Mediendienst für die Client-Vorrichtung bereitzustellen, Folgendes darstellt: wenn er einen Video-on-Demand-Dienst startet oder während eines Vorgangs des Video-on-Demand-Dienstes der Heim-Streaming-Medienserver nicht in der Lage ist, den Mediendienst für die Client-Vorrichtung bereitzustellen;
während des Vorgangs des Video-on-Demand-Dienstes, wenn der Heim-Streaming-Medienserver nicht in der Lage ist, den Mediendienst für die Client-Vorrichtung bereitzustellen, der Heim-Streaming-Medienserver ferner eingerichtet ist, die Information des Streaming-Medienservers zu erhalten, der in der Lage ist, den Mediendienst bereitzustellen, Medienressourcen von dem Streaming-Medienserver anzufordern, der in der Lage ist, den Mediendienst bereitzustellen, und eine Steuernachricht zwischen der Client-Vorrichtung und dem Streaming-Medienserver zu übertragen, der in der Lage ist, den Mediendienst transparent bereitzustellen; und die Client-Vorrichtung ferner eingerichtet ist, eine Medienverbindung mit dem Streaming-Medienserver herzustellen, der in der Lage ist, den Mediendienst bereitzustellen, eine Medienquellenadresse der Client-Vorrichtung zu aktualisieren und einen Medienstrom zu empfangen.

6. System nach Anspruch 5, wobei, wenn ein Video-on-Demand-Service beginnt, falls der Heim-Streaming-Medienserver nicht in der Lage ist, den Mediendienst für die Client-Vorrichtung bereitzustellen,
der Heim-Streaming-Medienserver ferner eingerichtet ist, an die Client-Vorrichtung die Information des Streaming-Medienservers weiterzuleiten, der in der Lage ist, den Mediendienst bereitzustellen, wobei die Information von dem Verteilerserver erhalten wird; und
die Client-Vorrichtung ferner eingerichtet ist, um einen Dienst auf Anforderung von dem Streaming-Medienserver anzufordern, der in der Lage ist, den Mediendienst gemäß der Information bereitzustellen.

7. Heim-Streaming-Medienserver, wobei während des Vorgangs des Video-on-Demand-Dienstes, wenn der Heim-Streaming-Medienserver nicht in der Lage ist, den Mediendienst für die Client-Vorrichtung bereitzustellen, der Heim-Streaming-Medienserver Folgendes umfasst:
ein Anfragemodul, das eingerichtet ist, von einem Verteilerserver Information eines Streaming-Medienservers zu erhalten, der in der Lage ist, den Mediendienst bereitzustellen;
ein Sendemodul, das eingerichtet ist, an die Client-Vorrichtung die Information des Streaming-Medienservers weiterzuleiten, der in der Lage ist, den Mediendienst für eine Client-Vorrichtung bereitzustellen, wobei die Information von dem Verteilerserver erhalten wird;
ein Simulationsmodul, das eingerichtet ist, um die Client-Vorrichtung zu simulieren, um Medienressourcen von dem Streaming-Medienserver, der in der Lage ist, den Mediendienst für die Client-Vorrichtung bereitzustellen, anzufordern; und
ein transparentes Übertragungsmodul, das eingerichtet ist, eine Steuernachricht zwischen der Client-Vorrichtung und dem Streaming-Medienserver zu übertragen, der in der Lage ist, den Mediendienst transparent bereitzustellen;
wobei der Streaming-Medienserver ferner eingerichtet ist, um die Information des Streaming-Medienservers zu erhalten, der in der Lage ist, den Mediendienst bereitzustellen, Medienressourcen von dem Streaming-Medienserver anzufordern, der in der Lage ist, den Mediendienst bereitzustellen; die Client-Vorrichtung eingerichtet ist, um eine Medienverbindung mit dem Streaming-Medienserver herzustellen, der in der Lage ist, den Mediendienst bereitzustellen, eine Medienquellenadresse der Client-Vorrichtung zu aktualisieren und einen Medienstrom zu empfangen.

## Revendications

1. Un procédé mis en oeuvre par ordinateur destiné à la mise en oeuvre d'un service de vidéo à la demande qui est appliqué dans un système de vidéo à la demande comprenant un dispositif client, un serveur de répartition, un serveur multimédia de diffusion en continu et un serveur multimédia de diffusion en continu domestique qui fournit un service multimédia destiné à un client, dans lequel,
lorsque le serveur multimédia de diffusion en continu domestique est incapable de fournir un service multimédia destiné au dispositif client, le serveur multimédia de diffusion en continu domestique obtient, à partir du serveur de répartition, des informations relatives à un serveur multimédia de diffusion en continu capable de fournir le service multimédia, et le service multimédia est fourni par ledit serveur multimédia de diffusion en continu pour le dispositif client,
dans lequel le serveur multimédia de diffusion en continu domestique qui est incapable de fournir le service multimédia destiné au dispositif client représente : lors du démarrage d'un service de vidéo à la demande ou au cours d'un traitement du service de vidéo à la demande, le serveur multimédia de diffusion en continu domestique est incapable de fournir le service multimédia au dispositif client, au cours du traitement du service de vidéo à la demande, lorsque le serveur multimédia de diffusion en continu domestique est incapable de fournir le service multimédia destiné au dispositif client, l'obtention par le serveur multimédia de diffusion en continu domestique des informations relatives au serveur multimédia de diffusion en continu capable de fournir le service multimédia, et la demande de ressources multimédias à partir du serveur multimédia de diffusion en continu capable de fournir le service multimédia, et la transmission d'un message de commande entre le dispositif client et le serveur multimédia de diffusion en continu capable de fournir le service multimédia de manière transparente, et l'établissement par le dispositif client d'une liaison multimédia avec le serveur multimédia de diffusion en continu capable de fournir le service multimédia, et l'actualisation d'une adresse source multimédia du dispositif client.

2. Le procédé selon la revendication 1, dans lequel l'étape de fourniture du service multimédia destiné au dispositif client par ledit serveur multimédia de diffusion en continu capable de fournir le service multimédia, comprend :
lorsque le service de vidéo à la demande démarre, si le serveur multimédia de diffusion en continu domestique est incapable de fournir le service multimédia destiné au dispositif client, le transfert par le serveur multimédia de diffusion en continu domestique vers le dispositif client des informations relatives au serveur multimédia de diffusion en continu capable de fournir le service multimédia, qui sont obtenues à partir du serveur de répartition vers le dispositif client, et la demande par le dispositif client d'un service à la demande à partir du serveur multimédia de diffusion en continu capable de fournir le service multimédia en fonction des informations.

3. Le procédé selon la revendication 1, dans lequel l'étape de demande par le serveur multimédia de diffusion en continu domestique des ressources multimédias à partir du serveur multimédia de diffusion en continu capable de fournir le service multimédia comprend :
la construction par le serveur multimédia de diffusion en continu domestique d'une commande d'établissement du protocole RTSP qui transporte des informations d'adresses multimédias relatives au dispositif client, et la simulation du dispositif client de façon à demander les ressources multimédias à partir du serveur multimédia de diffusion en continu capable de fournir le service multimédia.

4. Le procédé selon l'une quelconque des revendications 1 à 3, dans lequel le procédé comprend en outre : lorsque le serveur multimédia de diffusion en continu capable de fournir le service multimédia destiné au dispositif client fournit le service multimédia destiné au dispositif client, le serveur multimédia de diffusion en continu domestique maintient une liaison de commande avec le dispositif client.

5. Un système de vidéo à la demande qui comprend un dispositif client, un serveur de répartition, un serveur multimédia de diffusion en continu et un serveur multimédia de diffusion en continu domestique fournissant un service multimédia destiné à un client, dans lequel, lorsque le serveur multimédia de diffusion en continu domestique est incapable de fournir un service multimédia destiné au dispositif client,
le serveur multimédia de diffusion en continu domestique est adapté de façon à rechercher, à partir du serveur de répartition, des informations relatives au serveur multimédia de diffusion en continu capable de fournir le service multimédia, et est adapté de façon à simuler le dispositif client de façon à demander des ressources multimédias à partir dudit serveur multimédia de diffusion en continu et à transmettre un message de commande entre le dispositif client et ledit serveur multimédia de diffusion en continu de manière transparente,
le serveur de répartition est adapté de façon à, après la réception d'une demande de recherche à partir du serveur multimédia de diffusion en continu domestique, sélectionner un serveur multimédia de diffusion en continu capable de fournir le service multimédia destiné au dispositif client, et à renvoyer les informations relatives audit serveur multimédia de diffusion en continu au serveur multimédia de diffusion en continu domestique, et
le dispositif client est adapté de façon à recevoir un service multimédia à partir du serveur multimédia de diffusion en continu sélectionné par le serveur de répartition,
dans lequel le serveur multimédia de diffusion en continu domestique qui est incapable de fournir le service multimédia destiné au dispositif client représente : lors du démarrage d'un service de vidéo à la demande ou au cours d'un traitement du service de vidéo à la demande, le serveur multimédia de diffusion en continu domestique est incapable de fournir le service multimédia au dispositif client,
au cours du traitement du service de vidéo à la demande, lorsque le serveur multimédia de diffusion en continu domestique est incapable de fournir le service multimédia destiné au dispositif client, le serveur multimédia de diffusion en continu domestique est adapté en outre de façon à obtenir les informations relatives au serveur multimédia de diffusion en continu capable de fournir le service multimédia, à demander des ressources multimédias à partir du serveur multimédia de diffusion en continu capable de fournir le service multimédia et à transmettre un message de commande entre le dispositif client et le serveur multimédia de diffusion en continu capable de fournir le service multimédia de manière transparente, et le dispositif client est adapté en outre de façon à établir une liaison multimédia avec le serveur multimédia de diffusion en continu capable de fournir le service multimédia, à actualiser une adresse source multimédia du dispositif client et à recevoir un flux multimédia.

6. Le système selon la revendication 5, dans lequel, lorsqu'un service de vidéo à la demande démarre, si le serveur multimédia de diffusion en continu domestique est incapable de fournir le service multimédia destiné au dispositif client,
le serveur multimédia de diffusion en continu domestique est adapté en outre de façon à transférer au dispositif client les informations relatives au serveur multimédia de diffusion en continu capable de fournir le service multimédia, qui sont obtenues à partir du serveur de répartition, et
le dispositif client est adapté en outre de façon à demander un service à la demande à partir du serveur multimédia de diffusion en continu capable de fournir le service multimédia en fonction des informations.

7. Un serveur multimédia de diffusion en continu domestique, dans lequel, au cours du traitement du service de vidéo à la demande, lorsque le serveur multimédia de diffusion en continu domestique est incapable de fournir le service multimédia destiné au dispositif client, le serveur multimédia de diffusion en continu domestique comprend :
un module de recherche, adapté de façon à obtenir à partir d'un serveur de répartition des informations relatives à un serveur multimédia de diffusion en continu capable de fournir le service multimédia,
un module d'envoi, adapté de façon à transférer vers le dispositif client les informations relatives au serveur multimédia de diffusion en continu capable de fournir le service multimédia destiné à un dispositif client, qui sont obtenues à partir du serveur de répartition,
un module de simulation, adapté de façon à simuler le dispositif client de façon à demander des ressources multimédias à partir du serveur multimédia de diffusion en continu capable de fournir le service multimédia destiné au dispositif client, et
un module de transmission transparent, adapté de façon à transmettre un message de commande entre le dispositif client et le serveur multimédia de diffusion en continu capable de fournir le service multimédia de manière transparente,
dans lequel le serveur multimédia de diffusion en continu est adapté en outre de façon à obtenir les informations relatives au serveur multimédia de diffusion en continu capable de fournir le service multimédia, à demander des ressources multimédias à partir du serveur multimédia de diffusion en continu capable de fournir le service multimédia, le dispositif client est adapté de façon à établir une liaison multimédia avec le serveur multimédia de diffusion en continu capable de fournir le service multimédia, à actualiser une adresse source multimédia du dispositif client et à recevoir un flux multimédia.
